# NEUE EUROPÄISCHE PATENTSCHRIFT

(11) **EP 1 213 107 B2**
(45) Veröffentlichungstag und Bekanntmachung des Hinweises auf die Entscheidung über den Einspruch: **12.08.2015**
(45) Hinweis auf die Patenterteilung: 30.09.2009
(21) Anmeldenummer: 01128292.8
(22) Anmeldetag: 29.11.2001
(51) Int. Cl.: B27B 5/32, B23D 61/02, B24B 23/00, B23B 31/00

(54) **Aufnahme zur Befestigung eines Werkzeugs an einer Antriebswelle und Adapter hierzu**
Mounting for fixing a tool to a drive shaft and adaptor therefor
Montage pour fixer un outil à un arbre d'entraînement et adapteur pour celui-ci

(30) Priorität: 07.12.2000 DE 10061559
(43) Veröffentlichungstag der Anmeldung: 12.06.2002
(73) Patentinhaber: C. & E. Fein GmbH, 73529 Schwäbisch-Gmünd-Bargau (DE)
(72) Erfinder: Jasch, Michael, 72793 Pfullingen (DE)
(74) Vertreter: Wallinger, Michael

(56) Entgegenhaltungen:
- EP-A- 0 369 390
- EP-A- 1 034 870
- EP-A2- 0 380 974
- DE-A1- 1 625 467
- DE-A1- 3 923 091
- DE-A1- 4 446 415
- DE-C2- 4 206 222
- DE-U- 1 878 647
- US-A- 1 947 662
- US-A- 3 584 667
- US-A- 4 428 120
- US-A- 4 938 731
- US-A- 5 303 688
- US-A- 5 496 316
- US-A- 5 690 459
- SCHRIEVER, K-H. ET AL: 'Enzyklopädie Naturwissenschaft und Technik', 1987, VERLAG MODERNE INDUSTRIE, LANDSBERG Seiten 5083 - 5087
- SCHÄFER, G.: 'Reformation der Zahnwellen-Verbindung' IMW-INSTITUSMITTEILUNG Nr. 19, 1994, Seiten 41 - 44
- Institutsmitteilungen 1994 "TU Clausthal für Maschinenwesen"
- BEITZ, W. ET AL: 'Dubbel, Taschenbuch für den Maschinenbau', Bd. 18, SPRINGER VERLAG, BERLIN Seiten T1 - T3

## Beschreibung

Die Erfindung betrifft eine Werkzeugmaschine mit einer um ihre Mittelachse hin- und her oszillierende Antriebswelle zum Antrieb eines Werkzeugs mit einer Aufnahme zur Befestigung eines Werkzeugs an der Antriebswelle, mit einer Befestigungsöffnung, die am Werkzeug oder an der Antriebswelle ausgebildet ist, durch die eine Mittelachse der Antriebswelle verläuft und die mit einem entsprechend geformten, erhaben ausgebildeten Befestigungsabschnitt an dem anderen der beiden Elemente zusammenwirkt, um eine formschlüssige Verbindung zur Übertragung eines Drehmomentes zwischen der Antriebswelle und dem Werkzeug zu bilden.

Die Erfindung betrifft ferner einen geeigneten Adapter, der verwendet werden kann, wenn die Befestigungsöffnung und der Befestigungsabschnitt von Werkzeug bzw. Antriebswelle nicht aufeinander abgestimmt sind.

Eine Aufnahme gemäß der eingangs genannten Art ist aus der EP 0 369 390 A2 bekannt. Hierbei weist ein U-förmig gewinkeltes Schneidmesser zum Durchtrennen von Klebewulsten bei Fensterscheiben von Kraftfahrzeugen zur Befestigung einer oszillierend antreibbaren Antriebswelle eine sternförmige Befestigungsöffnung in Form eines regelmäßigen Vielecks auf, die auf einen entsprechend geformten Befestigungsabschnitt der Antriebswelle aufsetzbar ist. Zur Fixierung des Schneidmessers nach dem Aufstecken mit seiner Befestigungsöffnung auf dem Befestigungsabschnitt der Antriebswelle ist eine Schraubverbindung, beispielsweise in Form einer Mutter, vorgesehen, die auf einen Gewindestutzen der Antriebswelle aufschraubbar ist.

Eine derartige Aufnahme zur Befestigung des Werkzeugs an der Antriebswelle ist insbesondere für oszillierend antreibbare Werkzeuge vorgesehen, bei denen eine formschlüssige Verbindung zwischen Antriebswelle und Werkzeug für die Übertragung höherer Drehmomente notwendig ist.

Dabei ist eine Vielzahl von Werkzeugen gebräuchlich, die nicht nur als Schneidmesser sondern auch für andere Aufgaben eingesetzt werden, beispielsweise zum Sägen. Mit solchermaßen oszillierend angetriebenen Sägeblättern lassen sich beispielsweise präzise Schnitte im Karosseriebau herstellen. Zum Sägen an schwer zugänglichen Stellen sind auch fingerartige Werkzeuge gebräuchlich, um beispielsweise im Holzbau spezielle Schnitte durchführen zu können. Ein weiteres Einsatzgebiet ist das Schleifen, wie z.B. in der EP 0 244 465 A1 beschrieben, oder das Schaben.

Als nachteilig hat sich bei der bekannten Aufnahme zur Verbindung zwischen Werkzeug und Antriebswelle insbesondere bei derartig oszillierend angetriebenen Werkzeugen herausgestellt, daß die Befestigungsöffnung nach längerem Betrieb mit hoher Belastung zum Ausschlagen neigt.

Aus der US-A-5,303,688 ist eine Verbindung zur Befestigung eines Kreissägeblattes an einer Antriebswelle offenbart, bei der an der Antriebswelle ein erhaben hervorstehender Befestigungsabschnitt von grundsätzlich dreieckiger Form mit einer abgerundeten Spitze, zwei davon ausgehenden gerade verlaufenden Seitenkanten und einem der abgerundeten Spitze gegenüberliegenden gekrümmten Abschnitt aufweist. Am Kreissägeblatt befindet sich eine entsprechend geformte Befestigungsöffnung, die zur formschlüssigen Verbindung mit dem erhabenen Abschnitt dient.

Mit einer derartigen Ausführung wird zwar eine gewisse Verbesserung im Vergleich zum vorbekannten Stand der Technik erreicht, jedoch kann auch eine derartige Verbindung zum Ausschlagen neigen, insbesondere wenn diese in Verbindung mit einem Oszillationsantrieb verwendet wird.

Weitere formschlüssige Verbindungen ähnlicher Bauart mit einem erhabenen Abschnitt an einer rotierend angetriebenen Antriebswelle und einer zugeordneten Befestigungsöffnung an einem Kreissägeblatt oder einem anderen rotierend angetriebenen Werkzeug sind aus der EP-A-1 0434 870, aus der DE-O-1 878 647, aus der US-A-1,947,662 und aus der EP-A-0 369 390 bekannt.

Auch diese Aufnahmen zur Verbindung zwischen einem Werkzeug und einer Antriebswelle sind mit den vorstehend beschriebenen Nachteilen behaftet.

Der Erfindung liegt somit die Aufgabe zugrunde, eine verbesserte Werkzeugmaschine mit einer Aufnahme zur Verbindung zwischen Antriebswelle und Werkzeug zu schaffen, bei der die Gefahr des Ausschlagens der Befestigungsöffnung verringert wird und eine Übertragung hoher Drehmomente auch im Langzeitbetrieb gewährleistet ist.

Ferner soll ein geeigneter Adapter angegeben werden, der zur Verbindung zwischen Werkzeug und Antriebswelle verwendet werden kann.

Diese Aufgabe wird erfindungsgemäß durch eine Werkzeugmaschine mit einer Aufnahme mit den Merkmalen des Anspruchs 1 gelöst.

Die Aufgabe der Erfindung wird auf diese Weise vollkommen gelöst.

Durch die neuartige Form wird nämlich das Auftreten von Drehmomentspitzen bzw. hohen Flächenpressungen an den bisher verwendeten scharfkantigen Spitzen eines regelmäßigen Vielecks vermieden. Statt dessen wird das Drehmoment nunmehr überwiegend durch annähernd radial verlaufende Seitenflanken übertragen.

Durch eine derartige Form werden punktartige Belastungen und damit eine hohe Flächenpressung, die bislang an Befestigungsöffnungen in Form von regelmäßigen Vielecken auftrat, vermieden.

Somit wird eine zuverlässige Verbindung zwischen Werkzeug und-Antriebswelle geschaffen, mit der außerordentlich hohe Drehmomente auch bei oszillierenden Antrieben oder stoßartiger Belastung übertragen werden können, ohne daß die Gefahr eines Ausschlagens von Befestigungsöffnung oder Befestigungsabschnitt besteht.

Die Ausbuchtungen und die zwischen benachbarten Ausbuchtungen zur Mittelachse hin vorlaufenden Krümmüngsabschnitte bilden eine geschlossene, durchgehend stetige Kurve, wobei stetig im mathematischen Sinn, d.h. ohne Unstetigkeiten wie Stufen oder dergleichen, zu verstehen ist.

Bei einer bevorzugten Weiterbildung der Erfindung weist die Befestigungsöffnung mindestens drei, vorzugsweise sechs nach außen weisende Ausbuchtungen auf, wobei je zwei benachbarte Ausbuchtungen durch einen zur Mittelachse hin vorlaufenden Krümmungsabschnitt stetig miteinander verbunden sind.

Mit einer solchen Ausführung ergibt sich eine besonders gleichmäßige Drehmomentübertragung, die hohe Flächenpressungen vermeidet.

Die Ausbuchtungen stellen nach außen konvexe Krümmungen dar und sind als abgerundete Spitzen ausgebildet.

In zusätzlicher Weiterbildung der Erfindung sind die Krümmungsabschnitte bogenförmig, vorzugsweise kreisbogenförmig ausgebildet.

In vorteilhafter Weiterbildung der Erfindung sind benachbarte Ausbuchtungen jeweils über Hohlkehlungen verbunden, deren Seitenflanken in einem gemeinsamen Scheitelpunkt zusammenlaufen.

Auf diese Weise wird eine besonders günstige Form mit stetigen, sanften Übergängen geschaffen, wobei die Drehmomentübertragung überwiegend über die Seitenflanken der Hohlkehlungen bzw. über die Ausbuchtungen erfolgt, so daß stoßartige Beanspruchungen und punktartige Belastungen vermieden werden.

Gemäß einer weiteren Ausgestaltung der Erfindung liegen die abgerundeten Spitzen auf einem ersten Kreis mit einem ersten Durchmesser und die Scheitelpunkte auf einem zweiten Kreis mit einem zweiten Durchmesser, wobei das Verhältnis zwischen dem ersten und dem zweiten Durchmesser ein Durchmesserverhältnis definiert, das zwischen etwa 4 bis 6, vorzugsweise etwa 4,5 bis 5,5, insbesondere etwa 5,1 beträgt.

Erfindungsgemäß liegen die abgerundeten Spitzen auf einem ersten Kreis mit einem ersten Durchmesser, während die abgerundeten Spitzen in ihrem äußeren Bereich kreisbogenförmig mit einem Radius gekrümmt sind, wobei das Verhältnis zwischen dem ersten Durchmesser und dem Radius etwa 30 bis 60, vorzugsweise etwa 34 bis 42, insbesondere etwa 37 beträgt.

Durch diese Merkmale läßt sich eine besonders günstige Drehmomentübertragung zwischen Antriebswelle und Werkzeug gewährleisten, ohne daß die Gefahr eines Ausschlagens bei oszillierender oder stoßartiger Belastung besteht.

Vorzugsweise ist die Befestigungsöffnung am Werkzeug und der Befestigungsabschnitt an der Antriebswelle ausgebildet.

Hierdurch läßt sich eine einfache Herstellung insbesondere durch Ausstanzen der Befestigungsöffnung am Werkzeug erzielen.

Gemäß einer weiteren Ausgestaltung der Erfindung umfaßt die Aufnahme eine Befestigungsschraube, die in ein Gewindesackloch der Antriebswelle einschraubbar ist.

Hierbei weist die Befestigungsschraube vorzugsweise einen Kopf auf, der zur Auflage auf dem Werkzeug dimensioniert ist.

In zusätzlicher Weiterbildung der Erfindung ist ein Spannflansch vorgesehen, der eine zentrale Öffnung zur Durchführung der Befestigungsschraube aufweist, und der auf seiner der Antriebswelle zugewandten Seite einen Ringsteg aufweist, der einen größeren Innendurchmesser als der Durchmesser der Befestigungsöffnung des Werkzeugs besitzt.

Durch diese Maßnahme läßt sich ein guter Anpreßdruck zur Befestigung erreichen.

In zusätzlicher Weiterbildung dieser Ausführung weist der Spannflansch auf seiner der Antriebswelle zugewandten Seite eine Vertiefung auf, die in Form und Größe auf den Befestigungsabschnitt der Antriebswelle abgestimmt ist.

In weiterer Ausgestaltung der Erfindung ist der Spannflansch drehbar an der Befestigungsschraube festgelegt.

Auf diese Weise wird die Handhabung vereinfacht.

Sofern der Befestigungsabschnitt an der Antriebswelle der Werkzeugmaschine vorgesehen ist, weist die Antriebswelle werkzeugseitig vorzugsweise einen Halteflansch auf, an dessen dem Werkzeug zugewandter Seite der Befestigungsabschnitt ausgebildet ist.

Auf diese Weise kann das Werkzeug mit der Antriebswelle verschraubt werden, wobei der Halteflansch als Anlage dient.

Die Aufgabe der Erfindung wird ferner durch einen Adapter gemäß Anspruch 14 gelöst.

Auf diese Weise wird es einerseits ermöglicht, Werkzeuge, die bereits mit der erfindungsgemäßen Aufnahme versehen sind, auf Werkzeugmaschine mit Antriebswellen zu verwenden, die einen herkömmlichen Befestigungsabschnitt, etwa in Form eines Mehrkants, aufweisen. Auf diese Weise wird sichergestellt, daß nicht sogleich sämtliche bei Anwendern bereits vorhandenen Werkzeugmaschinen ausgetauscht werden müssen, sofern hierzu schon die neuen Werkzeuge mit der erfindungsgemäßen Befestigungsöffnung verwendet werden sollen.

Hierbei weist die Adapterscheibe vorzugsweise eine zentrale Öffnung zur Durchführung einer in die Antriebswelle einschraubbaren Befestigungsschraube auf.

Andererseits wird es durch einen derartigen Adapter ermöglicht, auf einer Werkzeugmaschine mit einer Antriebswelle, die einen erfindungsgemäßen Befestigungsabschnitt aufweist, noch Werkzeuge alter Bauart zu spannen, die eine Befestigungsöffnung anderer Form, etwa die Form eines regelmäßigen Vielecks, besitzen.

Gemäß einer Ausführung weist der Adapter eine in ein Gewindesackloch der Antriebswelle einschraubbare Befestigungsschraube auf, die einen Kopf besitzt, der zur Auflage auf dem Werkzeug dimensioniert ist.

Auf diese Weise wird auf einen Spannflansch verzichtet und dessen Funktion bereits von der Befestigungsschraube selbst übernommen. Auch hierdurch wird eine gleichmäßige Kraftverteilung und gute Anlage des Werkzeugs an der Antriebswelle gewährleistet.

Auch kann der Adapter so ausgebildet sein, dass der Befestigungsabschnitt beispielsweise sechs abgerundete Spitzen aufweist. So führt ein winkelmäßiger Versatz des Befestigungsabschnitts an der einen Seite der Adapterscheibe gegenüber der entsprechend geformten Vertiefung an der gegenüberliegenden Seite der Adapterscheibe dazu, daß Werkzeuge an der Antriebswelle nicht mehr nur jeweils um Inkremente von 60° verdreht aufgenommen werden können, wie dies ohne Adapter möglich wäre, sondern daß das Werkzeug nunmehr gegenüber der Antriebswelle in Inkrementen von jeweils 30° verdreht werden und befestigt werden kann.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine stark vereinfachte, schematische Ansicht einer Werkzeugmaschine, deren Antriebswelle mit einer Aufnahme zur Befestigung eines Werkzeugs versehen ist;
- Fig. 2: eine Ansicht auf die Antriebswelle gemäß Fig. 1 von außen;
- Fig. 3: einen Querschnitt durch die Aufnahme der Werkzeugmaschine gemäß Fig. 1 mit einem darauf aufgesetzten Werkzeug;
- Fig. 4: einen Schnitt gemäß der Linie IV-IV gemäß Fig. 3;
- Fig. 5: einen Schnitt gemäß der Linie V-V gemäß Fig. 3;
- Fig. 6: eine Ansicht des bei der Aufnahme gemäß den Figuren 3 bis 5 verwendeten Spannflansches von seiner der Antriebswelle zugewandten Seite;
- Fig. 7: einen Querschnitt des Spannflansches gemäß Fig. 6;
- Fig. 8: eine alternative Ausführung einer Befestigungsschraube zur Verwendung mit der Aufnahme gemäß den Figuren 1 und 2;
- Fig. 9: einen Querschnitt durch einen Adapter zur Befestigung eines Werkzeugs mit einer erfindungsgemäßen Befestigungsöffnung an einer Antriebswelle einer Werkzeugmaschine herkömmlicher Bauart mit anders geformtem Befestigungsabschnitt;
- Fig. 10: eine Ansicht auf den Adapter gemäß Fig. 9 von der Antriebswelle aus gesehen;
- Fig. 11: eine Ansicht des Adapters von seiner dem Werkzeug zugewandten Außenseite aus gesehen;
- Fig. 12: einen Schnitt durch den äußeren Bereich einer Antriebswelle mit aufgesetztem Werkzeug unter Zwischenlage des Adapters gemäß Fig. 9 in Einbaustellung;
- Fig. 13: einen Querschnitt eines weiteren Adapters zur Befestigung von Werkzeugen mit herkömmlich geformten Befestigungsöffnungen an Werkzeugmaschinen, deren Antriebswelle mit einem nicht erfindungsgemäß geformten Befestigungsabschnitt versehen ist;
- Fig. 14: eine Ansicht des Adapters gemäß Fig. 13 von seiner der Antriebswelle abgewandten Seite her gesehen;
- Fig. 15: einen Schnitt durch eine Antriebswelle mit aufgesetztem Werkzeug unter Zwischenlage des Adapters gemäß Fig. 13 und 14 in Einbaustellung;
- Fig. 16: eine leicht gegenüber der Ausführung gemäß Fig. 15 abgewandelte Ausführung zur Befestigung des Werkzeugs an der Antriebswelle unter Zwischenlage eines abgewandelten Adapters in Einbaustellung;
- Fig. 17: eine Ansicht des Adapters gemäß Fig. 16;
- Fig. 18: eine Aufsicht einer weiteren Ausführung eines nicht erfindungsgemäßen Adapters;
- Fig. 19: einen Querschnitt des Adapters gemäß Fig. 18 und
- Fig. 20: eine Unteransicht des Adapters gemäß Fig. 18.

Die zeichnerischen Darstellungen der Ausführungsbeispiele weichen in ihren Abmessungen von der erfindungsgemäßen Ausgestaltung ab.

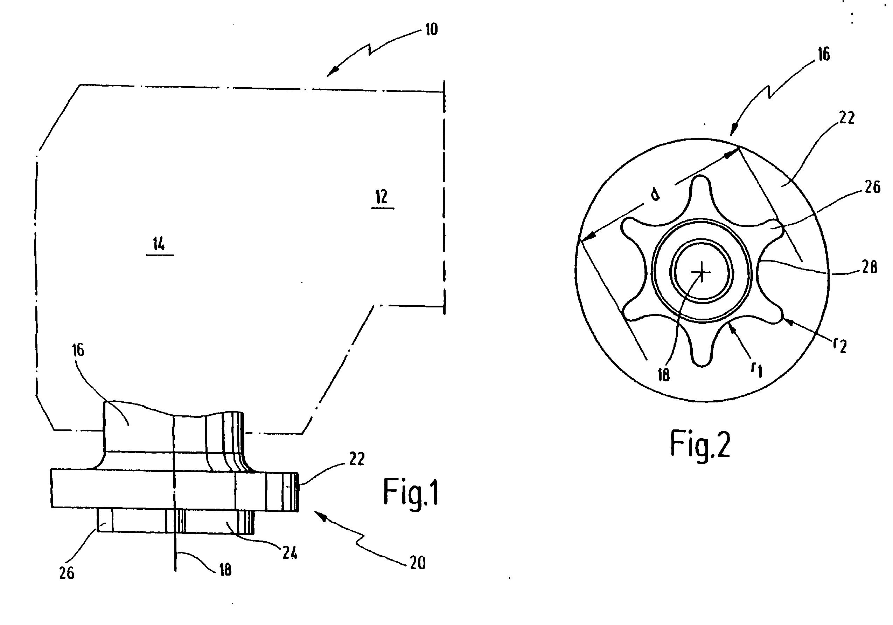

In Fig. 1 ist eine Werkzeugmaschine, die insgesamt mit der Ziffer 10 bezeichnet ist, äußerst schematisch dargestellt. Die Werkzeugmaschine 10 umfaßt einen mit der Ziffer 12 angedeuteten Antrieb, der über ein mit 14 angedeutetes Getriebe eine Antriebswelle 16 antreibt. Am äußeren Ende der Antriebswelle 16 ist ein Halteflansch 22 vorgesehen, dessen Außendurchmesser größer als der Durchmesser der Antriebswelle 16 ist und von dessen Stirnfläche aus ein Befestigungsabschnitt 24 nach außen hervorsteht. Auf den Befestigungsabschnitt 24 der Antriebswelle 16 kann ein in den Figuren 1 und 2 nicht dargestelltes Werkzeug von außen aufgesteckt und mit der Antriebswelle 16 verschraubt werden.

Im vorliegenden Fall ist die Werkzeugmaschine 10 derart ausgebildet, daß die Antriebswelle 16 durch das Getriebe 14 in einer um ihre Mittelachse 18 hin- und heroszillierende Oszillationsbewegung mit hoher Frequenz von z.B. etwa 5.000 bis 30.000 Schwingungen pro Minute und kleinem Verschwenkwinkel von beispielsweise etwa 0,5° bis 5° versetzt wird.

Um eine formschlüssige Verbindung zwischen dem Werkzeug und der Antriebswelle 16 zu ermöglichen, weist der Befestigungsabschnitt 24 der Antriebswelle 16 eine spezielle Form auf, durch die mit einer entsprechend geformten Befestigungsöffnung des Werkzeugs eine formschlüssige Verbindung zwischen Werkzeug und Antriebswelle 16 gewährleistet wird.

Die Form des Befestigungsabschnitts, die der Form der Befestigungsöffnung des Werkzeugs entspricht, ist aus Fig. 2 näher zu ersehen.

Der Befestigungsabschnitt weist insgesamt sechs abgerundete Spitzen 26 oder Ausbuchtungen auf, die in gleichmäßigen Winkelabständen von jeweils 60° um die Mittelachse 18 der Antriebswelle 16 herum angeordnet sind. Dabei sind jeweils zwei benachbarte, abgerundete Spitzen 26 durch einen Krümmungsabschnitt 28 verbunden, der zur Mittelachse 18 hin vorläuft. Die Krümmungsabschnitte 28 sind kreisbogenförmig ausgebildet und gehen von einem Scheitelpunkt aus, der der Mittelachse 18 am nächsten kommt, stetig über ihren beiden Enden jeweils unmittelbar in die abgerundeten Spitzen 26 über, die ihrerseits im Außenbereich gleichfalls kreisbogenförmig gekrümmt sind. Benachbarte abgerundete Spitzen 26 sind auf diese Weise über die Krümmungsabschnitte 28, die Hohlkehlungen bilden, stetig miteinander verbunden. Insgesamt entsteht so durch die Ausbuchtungen oder abgerundeten Spitzen 26 und die Krümmungsabschnitte 28 eine geschlossene, stetige Kurve.

In diesem Zusammenhang ist der Begriff "stetig" in seiner mathematischen Bedeutung zu verstehen, d.h. ohne sprunghafte Übergänge, wie etwa Stufen.

Bei dem in Fig. 2 dargestellten Befestigungsabschnitt 24 beträgt der Durchmesser des Kreises, der durch die äußersten Enden der abgerundeter Spitzen 26 definiert ist und der durch d bezeichnet ist, etwa 18 mm. Der Krümmungsradius r₁ der Krümmungsabschnitte 28 zwischen zwei benachbarten abgerundeten Spitzen 26 beträgt im dargestellten Fall etwa 3,56 mm. Dagegen beträgt der Krümmungsradius r₂ einer jeden abgerundeten Spitze 26 etwa 0,95 mm.

Es versteht sich, daß die Form einer Befestigungsöffnung eines auf den Befestigungsabschnitt 24 aufzusetzenden Werkzeugs unmittelbar auf den Befestigungsabschnitt 24 abgestimmt ist, um eine Aufnahme und formschlüssige Verbindung zu gewährleisten. Die Toleranzen der entsprechenden Befestigungsöffnung sind in geeigneter Weise an die Form des Befestigungsabschnitts 24 angepaßt, um eine gute Mitnahme zu gewährleisten, ein Klemmen jedoch zu vermeiden.

So könnte das Maß d bei der Befestigungsöffnung etwa 18,1 mm betragen, während für den Krümmungsradius r₁ ein Radius von etwa 3,53 mm verwendet werden könnte und für den Radius der abgerundeten Spitzen ein Radius von etwa 1,0 mm.

Durch eine derartige formschlüssige Verbindung zwischen Befestigungsöffnung und Befestigungsabschnitt wird eine formschlüssige Kraftübertragung zwischen Werkzeug und Antriebswelle ermöglicht, wobei gleichzeitig die Gefahr eines Ausschlagens der Befestigungsöffnung oder der abgerundeten Spitzen des Befestigungsabschnitts auch bei Übertragung hoher Drehmomente bei oszillierender oder sogar stoßartiger Belastung vermieden wird. Dies wird im wesentlichen dadurch erreicht, daß die Seitenflanken der Krümmungsabschnitte 28 in Teilbereichen annähernd radial verlaufen.

Es versteht sich, daß die Verhältnisse zwischen dem Abstand d zwischen zwei abgerundeten Spitzen 26 einerseits und den Krümmungsradien der Krümmungsabschnitte 28 bzw. der abgerundeten Spitzen 26 andererseits in weiten Grenzen variiert werden können, ohne die Vorteile der zuverlässigen und gleichmäßigen Kraftübertragung zu verlieren. Ferner können auch mehr oder weniger als sechs Spitzen 26, die vorzugsweise abgerundet sind, vorgesehen sein.

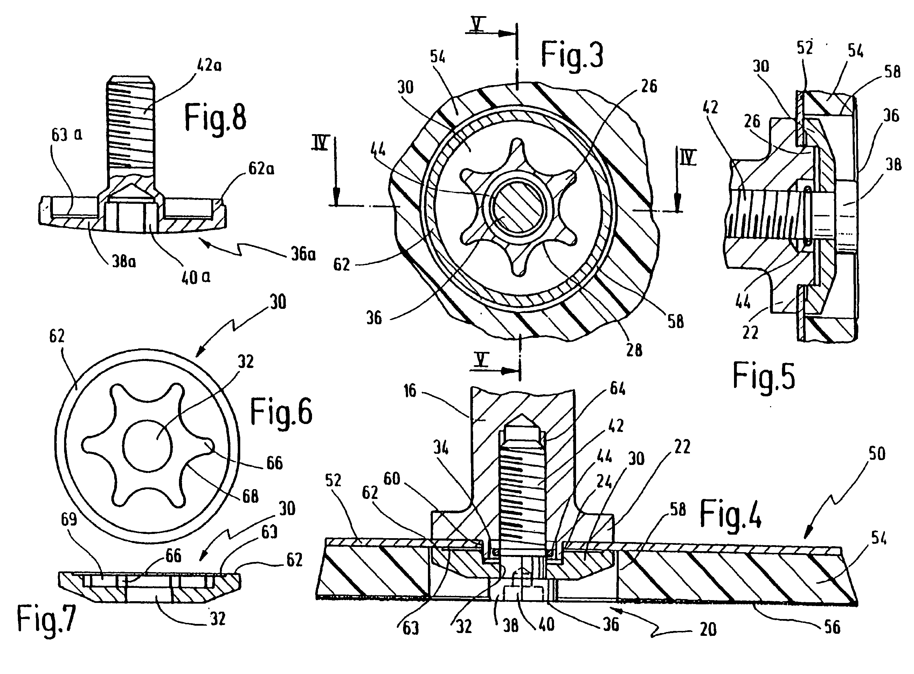

Die Befestigung eines Werkzeugs an einer Werkzeugantriebswelle 16 mit einem Befestigungsabschnitt 24 gemäß den Figuren 1 und 2 wird im folgenden näher anhand der Figuren 3 bis 7 erläutert.

Bei dem Werkzeug 50 handelt es sich um einen dreieckförmigen Schleifteller mit nach außen konvex gewölbten Seitenkanten bekannter Bauart. Das Werkzeug 50 weist eine Halteplatte 52 auf, die beispielsweise aus Aluminium bestehen kann und an deren Unterseite ein nachgiebiges Kissen 54, das etwa aus einem Polyurethan-Schaum bestehen kann, vorgesehen ist. An der äußeren Seite des Kissens 54 ist eine Aufnahmefläche 56 vorgesehen, die etwa mit einer Klettaufnahme für ein entsprechend geformtes Schleifpapier versehen sein kann. Alternativ könnte ein Schleifpapier beispielsweise durch Aufkleben auf dem Kissen 54 befestigt werden. An der Halteplatte 52 des Werkzeugs 50 ist eine Befestigungsöffnung 60 vorgesehen, die der zuvor anhand von Fig. 2 erläuterten Form entspricht und in ihrer Größe entsprechend angepaßt ist. Innerhalb des Kissens 54 ist ferner eine Ausnehmung 58 vorgesehen, die es gestattet, das Werkzeug 50 bei auf dem Befestigungsabschnitt 24 aufgesteckter Halteplatte 52 von außen her durch Aufstecken eines Spannflansches 30 zu sichern und diesen durch eine zentrale Befestigungsschraube 36, die in die Antriebswelle 16 eingeschraubt wird, zu befestigen.

Wie vorstehend bereits erwähnt, ist die Form der Befestigungsöffnung 60 in der Halteplatte 52 des Werkzeugs 50 auf die Form des Befestigungsabschnitts 24 der Antriebswelle 16 abgestimmt. Der Spannflansch 30 weist eine zentrale Öffnung 32 zur Durchführung der z.B. genormten Befestigungsschraube 36 auf.

Auf seiner der Antriebswelle 16 zugewandten Seite weist der Spannflansch 30 ferner eine Vertiefung 34 auf, die gleichfalls in Form und Größe auf die Form des Befestigungsabschnitts 24 der Antriebswelle 16 abgestimmt ist. Somit ist nicht nur die Befestigungsplatte 52 sondern auch der Spannflansch 30 formschlüssig mit dem Befestigungsabschnitt 24 der Antriebswelle 16 verbunden. Die Befestigungsschraube 36 verläuft durch die Öffnung 32 hindurch und ist auf der Seite der Antriebswelle 16 durch einen Sprengring 44 unverlierbar mit dem Spannflansch 30 verbunden. Innerhalb des Kopfes 38 der Befestigungsschraube 36, die gemeinsam mit dem Spannflansch 30 vollständig versenkt innerhalb der Ausnehmung 58 des Kissens 54 aufgenommen ist, ist ein Inbus 40 vorgesehen, um eine Betätigung der Schraube 36 von außen zu ermöglichen. Im, in den Figuren 4 und 5 dargestellten, zusammengebauten Zustand ist die Befestigungsschraube 36 mit ihrem Gewindeabschnitt 42 in ein Gewindesackloch 64 der Antriebswelle 16 eingeschraubt.

Um eine gute Flächenpressung zwischen dem Spannflansch 30 und der Befestigungsplatte 52 beim Anpressen der Befestigungsplatte 52 gegen den Halteflansch 22 der Antriebswelle 16 zu gewährleisten und gleichzeitig ein Lösen der Befestigungsschraube 36 im Betrieb zu vermeiden, weist der Spannflansch 30 auf seiner der Antriebswelle 16 zugewandten Seite eine Eindrehung 63 geringer Tiefe auf, durch die ein am Außenumfang verbleibender, in Richtung auf die Antriebswelle 16 hervorstehender Ringsteg 62 gebildet ist.

Die Form des Spannflansches ist zusätzlich noch aus den Figuren 6 und 7 näher zu ersehen.

Statt der Verwendung eines Spannflansches 30 besteht natürlich auch die Möglichkeit, das Werkzeug 50 unmittelbar durch eine Befestigungsschraube mit entsprechend geformtem Kopf an der Antriebswelle 16 zu befestigen.

Eine derartige Befestigungsschraube 36a ist in Fig. 8 dargestellt.

Der Kopf 38a der Befestigungsschraube 36a ist flanschartig nach außen verbreitert, etwa in der Form des zuvor beschriebenen Spannflansches 30. Der Kopf 38a ist an seiner der Antriebswelle 16 zugewandten Seite mit einer kreisringförmigen Eindrehung 63a versehen, so daß am äußeren Rand einen Ringsteg 62a verbleibt, mit dem der Kopf 38a unmittelbar an die Befestigungsplatte 52 des Werkzeugs 50 anpreßbar ist. Wiederum ist der Kopf 38a mit einem Inbus 40a versehen.

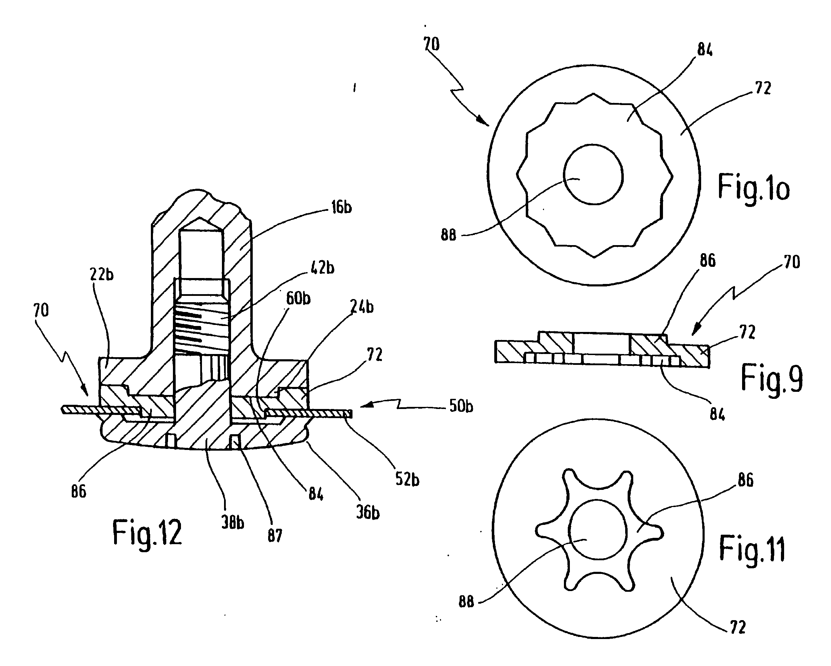

Anhand der Figuren 9 bis 12 wird nunmehr ein Adapter erläutert, der es ermöglicht, ein Werkzeug, das mit einer erfindungsgemäß geformten Befestigungsöffnung versehen ist, an der Antriebswelle einer Werkzeugmaschine zu spannen, die mit einem Befestigungsabschnitt herkömmlicher Bauart, etwa in Form eines Sechskantes, versehen ist. Somit können mit der neuen Aufnahme versehene Werkzeuge auch bei bereits vorhandenen Werkzeugmaschinen verwendet werden, womit vermieden werden kann, daß nebeneinander verschiedenartige Werkzeuge produziert werden müssen, da für bereits vorhandene Werkzeugmaschinen natürlich nach wie vor geeignete Werkzeuge bereitgestellt werden müssen.

Der insgesamt mit der Ziffer 70 bezeichnete Adapter umfaßt eine Adapterscheibe 72, deren Form im einzelnen aus den Figuren 9 bis 11 zu ersehen ist. Die Adapterscheibe 72 besitzt auf ihrer der Antriebswelle zugewandten Seite eine Vertiefung 84, die in Form und Größe der Form des Befestigungsabschnitts 24b der Antriebswelle 16b gemäß Fig. 12 angepaßt ist. Im dargestellten Fall ist der Befestigungsabschnitt 24b der Antriebswelle 16b sechskantförmig ausgebildet, während die Vertiefung 84 in Form eines Sechskants mit jedoch insgesamt zwölf Außenecken ausgebildet ist, so daß sich insgesamt eine sternförmige Form ergibt, wie aus Fig. 10 zu ersehen ist. Statt dessen könnte auch eine sechskantförmige Ausnehmung verwendet werden, die unmittelbar der Form des Befestigungsabschnitts 24b entspricht. Auf der gegenüberliegenden, der Antriebswelle 16b abgewandten Seite ist die Adapterscheibe 72 mit einem erhaben hervorstehenden Befestigungsabschnitt 86 versehen, der der Form der erfindungsgemäßen Aufnahme mit abgerundeten Spitzen entspricht. Das Werkzeug 50b weist gemäß Fig. 12 eine entsprechend geformte Befestigungsöffnung 60b auf, die eine formschlüssige Verbindung mit dem Befestigungsabschnitt 86 der Adapterscheibe 72 ermöglicht.

Wiederum wird eine Befestigungsschraube 36b zur Befestigung des Werkzeugs 50b an der Antriebswelle 16b verwendet. Die Befestigungsschraube 36b entspricht weitgehend der anhand von Fig. 8 beschriebenen Befestigungsschraube, jedoch ist in Abwandlung von der in Fig. 8 beschriebenen Ausführung an der Außenseite kein Inbus vorgesehen, sondern zwei Vertiefungen 87, in die ein Steckschlüssel einsteckbar ist. Bei dem Werkzeug 50b kann es sich in Abwandlung von dem zuvor anhand der Figuren 4 und 5 beschriebenen Werkzeug beispielsweise um ein Schneidwerkzeug handeln, an dessen Befestigungsabschnitt oder Befestigungsplatte 52b die Befestigungsöffnung 60b vorgesehen ist. Wiederum ist die Befestigungsschraube 36b mit ihrem Gewindeabschnitt 42b in die Antriebswelle 16b eingeschraubt.

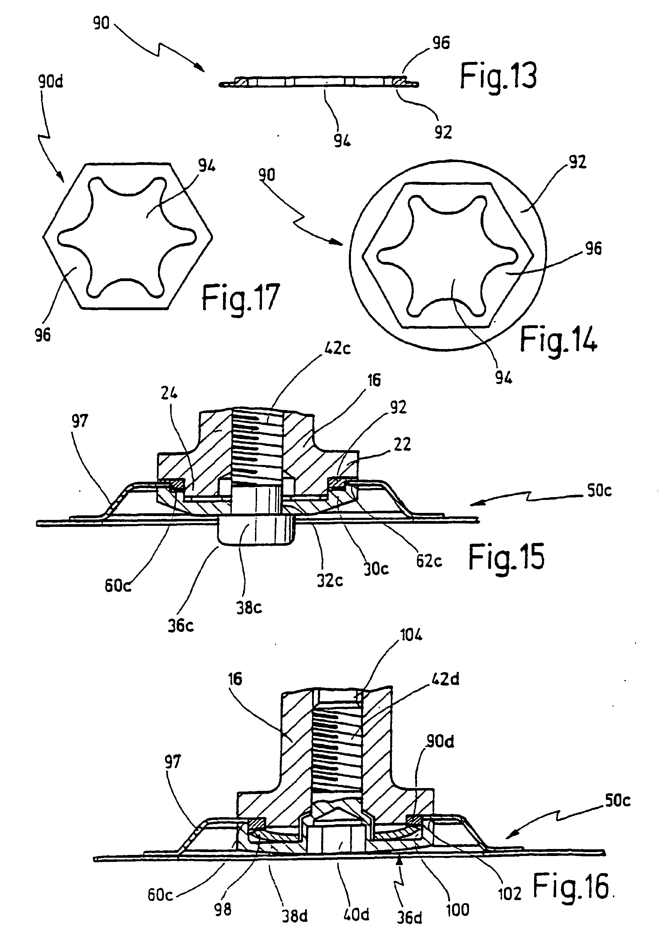

Anhand der Figuren 13 bis 15 wird ein weiterer Adapter 90 erläutert, der dazu verwendet werden kann, um an Werkzeugmaschinen, deren Antriebswelle mit einem erfindungsgemäßen Befestigungsabschnitt versehen ist, herkömmliche Werkzeuge aufspannen zu können, deren Befestigungsöffnung eine andere Form, beispielsweise die Form eines regelmäßigen Vielecks gemäß Fig. 10 aufweist.

Der Adapter 90 umfaßt eine Adapterscheibe 92, die von einer Befestigungsöffnung 94 der erfindungsgemäßen Form durchsetzt ist und mit der die Adapterscheibe unmittelbar formschlüssig auf dem Befestigungsabschnitt 24 der Antriebswelle 16 aufgenommen werden kann. Wie aus den Figuren 13 und 14 ersichtlich, weist die Adapterscheibe 92 auf ihrer der Antriebswelle 16 abgewandten Seite ein Befestigungsteil 96 auf, das sechskantförmig ausgebildet ist und erhaben von der Oberfläche der Adapterscheibe 92 in Richtung auf das Werkzeug hervorsteht und innerhalb deren die Befestigungsöffnung 94 vorgesehen ist.

Im zusammengebauten Zustand mit einem Werkzeug 50c unter Zwischenlage der Adapterscheibe 92 ergibt sich die Darstellung gemäß Fig. 15.

Bei dem Werkzeug 50c kann es sich beispielsweise um ein Sägeblatt handeln, das in seiner Mitte einen konisch hervorstehenden Befestigungsabschnitt 97 besitzt, innerhalb dessen eine sechskantförmige oder sternförmige Befestigungsöffnung 60c mit sechs Kanten und zwölf Außenecken gemäß Fig. 10 vorgesehen ist.

Die Verschraubung mit der Antriebswelle 16 erfolgt entweder gemäß Fig. 15 unter Verwendung eines Spannflansches 30c oder gemäß Fig. 16 unter Verwendung einer Befestigungsschraube 36d, die etwa der Befestigungsschraube gemäß Fig. 8 entspricht.

Gemäß Fig. 15 ist ein Spannflansch 30c vorgesehen, der mit einem Ringsteg 62c den Befestigungsteil gegen die Adapterscheibe 92 bzw. gegen den Halteflansch 22 der Antriebswelle 16 anpreßt.

Zur Befestigung an der Antriebswelle 16 dient eine Befestigungsschraube 36c mit einem Kopf 38c, in der ein nicht dargestellter Inbus vorgesehen ist und die mit ihrem Gewindeabschnitt 42c in die Antriebswelle 16 eingeschraubt ist.

Eine alternative Befestigungsmöglichkeit zur Befestigung des Werkzeugs 50c unter Verwendung eines leicht abgewandelten Adapters 90d ist in den Fig. 16 und 17 dargestellt.

Hierbei wird auf einen separaten Spannflansch 30c verzichtet. Statt dessen ist der Kopf 38d der Befestigungsschraube 36d flanschartig ausgebildet. Der Kopf 38d der Befestigungsschraube 36d weist eine Ringschulter 102 auf, die den Befestigungsabschnitt 97 des Werkzeugs 50c gegen den Adapter 92d beaufschlagt. Der Adapter 90d weist gemäß Fig. 17 entgegen der Ausführung gemäß Fig. 14 keine flanschartige Adapterscheibe auf, sondern ist an seiner Außenseite lediglich mit dem Befestigungsteil 96 gemäß Fig. 14 versehen, das in die Befestigungsöffnung 60c des Werkzeugs 50C paßt.

Zusätzlich ist in einer Vertiefung 100 auf der der Antriebswelle 16 zugewandten Seite des Kopfes 38d ein Federelement 98 in Form einer Tellerfeder aufgenommen, die auf dem Adapter 90d aufliegt. Beim Anziehen der Befestigungsschraube 36d unter Verwendung eines in den Inbus 40d einsteckbaren Inbusschlüssels wird das Federelement 98 somit gegen den Adapter 90d vorgespannt und verhindert ein Lösen der Befestigungsschraube 36d während des Betriebs.

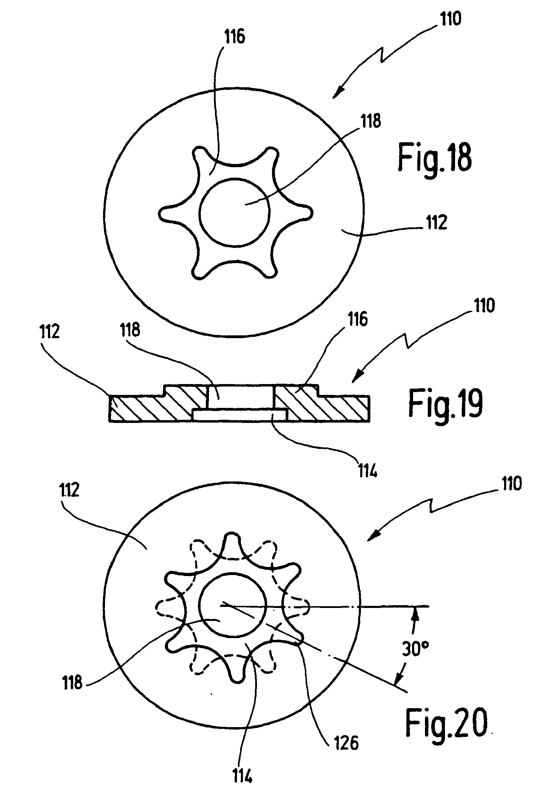

In den Figuren 18 bis 20 ist ein weiterer erfindungsgemäßer Adapter dargestellt und insgesamt mit der Ziffer 110 bezeichnet.

Der Adapter 110 weist eine Adapterscheibe 112 auf, an deren Oberseite ein erhabener Befestigungsabschnitt 116 ausgebildet ist, dessen Form und Größe vollständig der Form des Befestigungsabschnitts gemäß der Fig. 1 und 2 entspricht, wie aus Fig. 18 zu ersehen ist.

An der gegenüberliegenden Seite oder Bodenseite der Adapterschiebe 112 ist eine Vertiefung 114 ausgebildet, deren Form und Größe vollständig auf den Befestigungsabschnitt 116 abgestimmt ist, jedoch winkelmäßig gegenüber diesem versetzt angeordnet ist, vorzugsweise um 30°, wie aus Fig. 20 zu ersehen ist, in der der Befestigungsabschnitt 116 zusätzlich gestrichelt eingezeichnet ist.

Der Adapter 110 weist wiederum eine zentrale Öffnung 118 zur Durchführung einer Befestigungsschraube auf, die in ein Gewindesackloch an der Antriebswelle eingeschraubt werden kann.

Solch ein Adapter 110 kann vorteilhaft verwendet werden, wenn eine Verdrehung des Werkzeuges gegenüber der Antriebswelle um von 60° abweichende Zwischenwinkel, erwünscht ist. Im vorliegenden Fall kann das Werkzeug gegenüber der Antriebswelle in Inkrementen von 30° verdreht und befestigt werden. Würde man den Befestigungsabschnitt 24 mit zwölf Spitzen 26 ausbilden, wäre eine Verstellung um 30° auch möglich. Dies ist bei der geringen Baugröße jedoch nur schwer herstellbar.

## Patentansprüche

1. Werkzeugmaschine (10) mit einer um ihre Mittelachse hin- und heroszillierende Antriebswelle (16) zum Antrieb eines Werkzeugs (50, 50c, 50d) und mit einer Aufnahme (20) zur Befestigung des Werkzeugs (50, 50b, 50c) an der Antriebswelle (16, 16b), mit einer Befestigungsöffnung (60, 60b, 60c), die am Werkzeug (50, 50b, 50c, 50d) oder an der Antriebswelle (16, 16b) ausgebildet ist, durch die eine Mittelachse (18) der Antriebswelle (16, 166) verläuft und die mit einem entsprechend geformten Befestigungsabschnitt (24) an dem anderen der beiden Elemente zusammenwirkt, um eine formschlüssige Verbindung zur Übertragung eines Drehmomentes zwischen der Antriebswelle (16) und dem Werkzeug (50, 50c, 50d) zu bilden, **dadurch gekennzeichnet, daß** die Befestigungsöffnung (60, 60c, 60d) eine Mehrzahl von nach außen weisenden Ausbuchtungen (26) oder abgerundete Spitzen aufweist, und daß benachbarte Ausbuchtungen (26) oder abgerundete Spitzen über zur Mittelachse (18) hin vorlaufende Krümmungsabschnitte zu einer stetigen geschlossenen Kurve miteinander verbunden sind, wobei
die Ausbuchtungen (26) als abgerundete Spitzen (26) ausgebildet sind und wobei die abgerundeten Spitzen (28) auf einem ersten Kreis mit einem ersten Durchmesser (d) liegen, daß die abgerundeten Spitzen (28) in ihrem äußeren Bereich kreisbogenförmig mit einem Radius (r₂) gekrümmt sind, und daß das Verhältnis zwischen dem ersten Durchmesser (d) und dem Radius (r₂) etwa 30 bis 46, vorzugsweise etwa 34 bis 42, insbesondere etwa 37 beträgt.

2. Werkzeugmaschine nach Anspruch 1, **dadurch gekennzeichnet, daß** die Befestigungsöffnung (60, 60b, 60c) mindestens drei nach außen weisende Ausbuchtungen (26) aufweist, und daß je zwei benachbarte Ausbuchtungen (26) durch einen zur Mittelachse (18) hin vorlaufenden Krümmungsabschnitt (28) stetig miteinander verbunden sind.

3. Werkzeugmaschine nach Anspruch 1 oder 2, **dadurch gekennzeichnet, daß** die Befestigungsöffnung (60, 60b, 60c) sechs Ausbuchtungen (26) aufweist.

4. Werkzeugmaschine nach einem der Ansprüche 2 bis 3, **dadurch gekennzeichnet, daß** die Krümmungsabschnitte (28) bogenförmig, vorzugsweise kreisbogenförmig ausgebildet sind.

5. Werkzeugmaschine nach einem der vorhergehenden Ansprüche, **dadurch gekennzeichnet, daß** benachbarte Ausbuchtungen (26) jeweils über Hohlkehlungen (28) verbunden sind, deren Seitenflanken in einem gemeinsamen Scheitelpunkt zusammenlaufen.

6. Werkzeugmaschine nach Anspruch 5, **dadurch gekennzeichnet, daß** die abgerundeten Spitzen (26) auf einem ersten Kreis mit einem ersten Durchmesser (d) und die Scheitelpunkte auf einem zweiten Kreis mit einem zweiten Durchmesser (2r₁) liegen, und daß das Verhältnis zwischen dem ersten und dem zweiten Durchmesser ein Durchmesserverhältnis (d/2r₁) definiert, das zwischen etwa 4 bis 6, vorzugsweise etwa 4,5 bis 5,5, insbesondere etwa 5,1 beträgt.

7. Werkzeugmaschine nach einem der vorhergehenden Ansprüche, **dadurch gekennzeichnet, daß** die Befestigungsöffnung (60, 60c, 60d) am Werkzeug (50, 50c, 50d) und der Befestigungsabschnitt (24) an der Antriebswelle (16) ausgebildet sind.

8. Werkzeugmaschine nach Anspruch 7, **gekennzeichnet durch** eine Befestigungsschraube (36, 36a, 36c, 36d), die in ein Gewindesackloch (64) der Antriebswelle (16) einschraubbar ist.

9. Werkzeugmaschine nach Anspruch 8, **dadurch gekennzeichnet, daß** die Befestigungsschraube (36a) einen Kopf (38a, 38b, 38d) aufweist, der zur Auflage auf dem Werkzeug (50, 50b, 50d) dimensioniert ist.

10. Werkzeugmaschine nach Anspruch 8, **gekennzeichnet durch** einen Spannflansch (30, 30c), der eine zentrale Öffnung (32, 32c) zur Durchführung der Befestigungsschraube (36, 36c) aufweist, und der auf seiner der Antriebswelle (16) zugewandten Seite einen Ringsteg (62, 62c) aufweist, der zur Auflage auf dem Werkzeug (50, 50c) dimensioniert ist.

11. Werkzeugmaschine nach Anspruch 10, **dadurch gekennzeichnet, daß** der Spannflansch (30, 30c) auf seiner der Antriebswelle (16) zugewandten Seite eine Vertiefung (69) aufweist, die in Form und Größe auf den Befestigungsabschnitt (24) der Antriebswelle (16) abgestimmt ist.

12. Werkzeugmaschine nach Anspruch 10, **dadurch gekennzeichnet, daß** der Spannflansch (30) drehbar an der Befestigungsschraube (36) festgelegt ist.

13. Werkzeugmaschine nach Anspruch 1, **dadurch gekennzeichnet, daß** die Antriebswelle (16) werkzeugseitig einen Halteflansch (22) aufweist, an dessen dem Werkzeug (50, 50c, 50d) zugewandter Seite der Befestigungsabschnitt (24) ausgebildet ist.

14. Adapter zum Spannen eines Werkzeuges zum Schneiden, Sägen, Schleifen oder Schaben (50, 50b, 50c, 50d) mit einer Befestigungsöffnung (60, 60b, 60c, 60d) an einer hin- und heroszillierenden Antriebswelle (16b) einer Werkzeugmaschine, an der ein nicht passend zur Befestigungsöffnung (60, 60b, 60c, 60d) ausgebildeter Befestigungsabschnitt (24, 24b), vorgesehen ist, **dadurch gekennzeichnet, dass** die Befestigungsöffnung (60, 60c, 60d) eine Mehrzahl von nach außen weisenden Ausbuchtungen (26) oder abgerundete Spitzen aufweist, und wobei benachbarte Ausbuchtungen (26) oder abgerundete Spitzen über zur Mittelachse (18) hin vorlaufende Krümmungsabschnitte zu einer stetigen geschlossenen Kurve miteinander verbunden sind, und
dass eine Adapterscheibe (72) vorgesehen ist, an deren erster Seite eine Vertiefung (84) vorgesehen ist, die auf die Form des Befestigungsabschnitts (24b) an der Antriebswelle (16b) abgestimmt ist, um damit eine formschlüssige Verbindung zu bilden, und auf deren zweiter Seite ein erhabener Befestigungsabschnitt (86) vorgesehen ist, welcher eine formschlüssige Verbindung mit dem Werkzeug ermöglicht, und
eine Mehrzahl von nach außen weisenden abgerundeten Spitzen aufweist, wobei abgerundete Spitzen über zur Mittelachse (18) hin vorlaufende Krümmungsabschnitte zu einer stetigen geschlossenen Kurve miteinander verbunden sind, deren Form der Form der Befestigungsöffnung entscpricht, wobei
die abgerundeten Spitzen (28) auf einem ersten Kreis mit einem ersten Durchmesser (d) liegen, die abgerundeten Spitzen (28) in ihrem äußeren Bereich kreisbogenförmig mit einem Radius (r₂) gekrümmt sind, und das Verhältnis zwischen dem ersten Durchmesser (d) und dem Radius (r₂) etwa 30 bis 46, vorzugsweise etwa 34 bis 42, insbesondere etwa 37 beträgt.

15. Adapter nach Anspruch 14, **dadurch gekennzeichnet, daß** die Adapterscheibe (72) eine zentrale Öffnung (88) zur Durchführung einer in die Antriebswelle (16b) einschraubbaren Befestigungsschraube (36b) aufweist.

16. Adapter nach Anspruch 14, **gekennzeichnet durch** eine in ein Gewindesackloch (104) der Antriebswelle (16) einschraubbare Befestigungsschraube (36d), die einen Kopf (38d) aufweist, der zur Auflage auf dem Werkzeug (50c) dimensioniert ist.

## Claims

1. A machine tool (10) with a drive shaft (16) for driving a tool (50, 50c, 50d), wherein the drive shaft is oscillating back and forth around its central axis, and with a mounting (20) for fixing the tool (50, 50b, 50c) on the drive shaft (16, 16b), with an opening for fixation (60, 60b, 60c), which is formed on the tool (50, 50b, 50c, 50d) or on the drive shaft (16, 16b),
wherein the central axis (18) of the drive shaft (16, 16b) is extending through this opening for fixation and which interacts with an accordingly formed section for fixation (24) on the other of the two elements, to form a positive-locking connection to transfer a torque between the drive shaft (16) and the tool (50, 50c, 50d),
**characterized in**
**that** the opening for fixation (60, 60c, 60d) comprises a plurality of indentations (26) directing outwardly or spikes which are rounded,
and **that** adjoining indentations (26) or rounded spikes are connected to each other through curved sections which are extending towards the central axis (18), so that they form a closed and continuous line,
wherein the indentations (26) are formed as rounded spikes (26) and wherein the rounded spikes (28) are located on a first circle with a first diameter (d), so that the rounded spikes (28) are curved with a shape of an arc of a circle with a radius (r₂) at their outer section, and that the ratio of the first diameter (d) and the radius (r₂), is in the range from approximately 30 to 46, preferably in the range from approximately 34 to 42 and in particular it is approximately 37.

2. The machine tool according to claim 1, **characterized in that** the opening for fixation (60, 60b, 60c) comprises at least three indentations (26) directed outwardly and that each two adjoining indentations (26) are connected through a curved section (28) projecting towards the central axis (18), so that the indentations and the curved sections (28) form a continuous line.

3. The machine tool according to claim 1 or 2, **characterized in that** the opening for fixation (60, 60b, 60c) comprises six indentations (26).

4. The machine tool according to one of the claims 2 to 3, **characterized in that** the curved sections (28) are formed like curves, preferably like circular arcs.

5. The machine tool according to one of the preceding claims, **characterized in that** adjoining indentations (26) each are connected with fillets (28), wherein the side walls of the fillets converge in a combined crest.

6. The machine tool according to claim 5, **characterized in that** the rounded spikes (26) are located on a first circle with the diameter (d) and the crests are located on a second circle with a second diameter (2r₁), and that the ratio of the first and the second diameter define a ratio of diameters (d/2r₁), wherein this ratio of diameters is in the range from approximately 4 to 6, preferably in the range from approximately 4.5 to 5.5, and in particular it is approximately 5.1.

7. The machine tool according to one of the preceding claims, **characterized in that** the opening for fixation (60, 60c, 60d) is formed on the tool (50, 50c, 50d) and that the section for fixation (24) is formed on the drive shaft (16).

8. The machine tool according to claim 7, **characterized by** a fastening screw (36, 36a, 36c, 36d), which can be mounted in a threaded blind hole (64) on the drive shaft (16).

9. The machine tool according to claim 8, **characterized in that** the fastening screw (36a) comprises a head (38a, 38b, 38d), which is dimensioned to rest on the tool (50, 50b, 50d).

10. The machine tool according to claim 8, **characterized by** a clamping flange (30, 30c), which comprises a central opening (32, 32c) through which the fastening screw (36, 36c) is to be fed, and that there is a circular step (62, 62c), which is formed on the side of the clamping flange facing the drive shaft (16), and which is dimensioned to rest on the tool (50, 50c).

11. The machine tool according to claim 10, **characterized in that** the clamping flange (30, 30c) comprises a recess (69) on the side facing the drive shaft (16), the shape and dimension of which is adapted to the section for fixation (24) of the drive shaft (16).

12. The machine tool according to claim 10, **characterized in that** the clamping flange (30) is fixed rotatable at the fastening screw (36).

13. The machine tool according to claim 1, **characterized in that** the drive shaft (16) comprises a flange for fixation (22) on the tool (50, 50c, 50d) side, and that the section for fixation (24) is formed on the side directed towards the tool.

14. An adapter for a clamping of a tool (50, 50b, 50c, 50d) for cutting, sewing, grinding or shaving with an opening for fixation (60, 60b, 60c, 60d) at a drive shaft (16b) of a machine tool, wherein the drive shaft is oscillating back and forth around its central axis,
wherein this drive shaft (16b) comprises a section for fixation (24, 24b) which does not match the opening for fixation (60, 60b, 60c, 60d), **characterized in that** the opening for fixation (60, 60c, 60d) comprises a plurality of indentations (26) directing outwardly or rounded spikes,
and wherein adjoining indentations (26) or rounded spikes are connected to each other through curved sections which are extending towards the central axis (18), so that they form a closed and continuous line, and
that an adapter disk (72) is provided, the first side of which is provided with a recess (84), which is adapted to the shape of the section for fixation (24b) of the drive shaft (16b), to form a positive-locking connection therewith, and the second side of which comprises a protruding section for fixation (86), which allows for a positive-locking connection with the tool, and
that it comprises a plurality of rounded spikes directing outwardly, wherein the rounded spikes are connected to each other through curved sections which are extending towards the central axis (18), so that they form a closed and continuous line corresponding to the shape of the opening for fixation,
wherein the rounded spikes (28) are located on a first circle with a first diameter (d), so that the rounded spikes (28) are curved with a shape of an arc of a circle with a radius (r₂) at their outer section, and wherein the ratio of the first diameter (d) and the radius (r₂), is in the range from approximately 30 to 46, preferably in the range from approximately 34 to 42 and in particular it is approximately 37.

15. The adapter according to claim 14, **characterized in that** the adapter disk (72) comprises a central opening (88) to feed through a fastening screw (36b), wherein this fastening screw (36b) can be threaded in the drive shaft (16b).

16. The adapter according to claim 14, **characterized by** a fastening screw (36d), which can be mounted in a threaded blind hole (104) of the drive shaft (16), comprising a head (38d), which is dimensioned to rest on the tool (50c).

## Revendications

1. Machine-outil (10) comportant un arbre d'entraînement (16) oscillant en va-et-vient autour de son axe médian destiné à actionner un outil (50, 50c, 50d) et un logement (20) pour la fixation de l'outil (50, 50b, 50c) sur l'arbre d'entraînement (16, 16b), avec une ouverture de fixation (60, 60b, 60c) qui est réalisée sur l'outil (50, 50b, 50c, 50d) ou sur l'arbre d'entraînement (16, 16b), à travers laquelle passe un axe médian (18) de l'arbre d'entraînement (16, 166) et qui coopère avec un segment de fixation (24) de forme correspondante sur l'autre des deux éléments, pour réaliser un assemblage par conjugaison de forme pour la transmission d'un couple de rotation entre l'arbre d'entraînement (16) et l'outil (50, 50c, 50d), **caractérisé en ce que** l'ouverture de fixation (60, 60c, 60d) comporte une pluralité de proéminences (26) ou pointes arrondies, orientées vers l'extérieur, et **en ce que** des proéminences (26) ou pointes arrondies adjacentes sont reliées entre elles par des tronçons courbes en amont par rapport à l'axe médian (18), pour former une courbe fermée en continu,
les proéminences (26) étant réalisées sous la forme de pointes arrondies (26) et les pointes arrondies (28) se situant sur un premier cercle avec un premier diamètre (d), de sorte que les pointes arrondies (28), dans leur zone extérieure, sont courbées en forme d'arc de cercle avec un rayon (r₂), et que le rapport entre le premier diamètre (d) et le rayon (r₂) est égal à 30 à 46 environ, de préférence à 34 à 42 environ, en particulier à 37 environ.

2. Machine-outil selon la revendication 1, **caractérisée en ce que** l'ouverture de fixation (60, 60b, 60c) comporte au moins trois proéminences (26) orientées vers l'extérieur, et **en ce que** respectivement deux proéminences (26) adjacentes sont reliées en continu entre elles par un tronçon courbe (28) en amont par rapport à l'axe médian (18).

3. Machine-outil selon la revendication 1 ou 2, **caractérisée en ce que** l'ouverture de fixation (60, 60b, 60c) comporte six proéminences (26).

4. Machine-outil selon l'une quelconque des revendications 2 à 3, **caractérisée en ce que** les tronçons courbes (28) sont réalisés sous forme d'arc, de préférence sous forme d'arc de cercle.

5. Machine-outil selon l'une quelconque des revendications précédentes, **caractérisée en ce que** des proéminences (26) adjacentes sont reliées respectivement par des gorges creuses (28), dont les flancs latéraux convergent vers un sommet commun.

6. Machine-outil selon la revendication 5, **caractérisée en ce que** les pointes arrondies (26) sont situées sur un premier cercle avec un premier diamètre (d) et les sommets sont situés sur un deuxième cercle avec un deuxième diamètre (2r₁), et **en ce que** le rapport entre le premier et le deuxième diamètre définit un rapport (d/2r₁) qui est égal à 4 à 6 environ, de préférence à 4,5 à 5,5 environ, en particulier à 5,1 environ.

7. Machine-outil selon l'une quelconque des revendications précédentes, **caractérisée en ce que** l'ouverture de fixation (60, 60c, 60d) est réalisée sur l'outil (50, 50c, 50d) et le segment de fixation (24) est réalisé sur l'arbre d'entraînement (16).

8. Machine-outil selon la revendication 7, **caractérisée par** une vis de fixation (36, 36a, 36c, 36d) qui est apte à être vissée dans un trou borgne fileté (64) de l'arbre d'entraînement (16).

9. Machine-outil selon la revendication 8, **caractérisée en ce que** la vis de fixation (36a) comporte une tête (38a, 38b, 38d) qui est dimensionnée pour venir en appui sur l'outil (50, 50b, 50d).

10. Machine-outil selon la revendication 8, **caractérisée par** une bride de serrage (30, 30c) qui comporte un orifice central (32, 32c) pour le passage de la vis de fixation (36, 36c), et qui, sur sa face orientée vers l'arbre d'entraînement (16), comporte un rebord annulaire (62, 62c) qui est dimensionné pour venir en appui sur l'outil (50, 50c).

11. Machine-outil selon la revendication 10, **caractérisée en ce que** la bride de serrage (30, 30c), sur sa face orientée vers l'arbre d'entraînement (16), comporte un creux (69) qui, par sa forme et sa taille, est ajusté au segment de fixation (24) de l'arbre d'entraînement (16).

12. Machine-outil selon la revendication 10, **caractérisée en ce que** la bride de serrage (30) est fixée de manière rotative sur la vis de fixation (36).

13. Machine-outil selon la revendication 1, **caractérisée en ce que** l'arbre d'entraînement (16) comporte du côté outil une bride de fixation (22), le segment de fixation (24) étant réalisé sur la face de celle-ci, orientée vers l'outil(50, 50c, 50d).

14. Adaptateur destiné à serrer un outil pour couper, scier, limer ou araser (50, 50b, 50c, 50d) avec une ouverture de fixation (60, 60b, 60c, 60d) sur un arbre d'entraînement (16b) oscillant en va-et-vient d'une machine-outil, sur lequel est prévu un segment de fixation (24, 24b) réalisé de manière non ajustée à l'ouverture de fixation (60, 60b, 60c, 60d), **caractérisé en ce que** l'ouverture de fixation (60, 60c, 60d) comporte une pluralité de proéminences (26) ou pointes arrondies orientées vers l'extérieur, et les proéminences (26) ou pointes arrondies adjacentes étant reliées entre elles par des tronçons courbes en amont par rapport à l'axe médian (18) pour former une courbe fermée en continu, et
**en ce qu'**il est prévu un disque d'adaptateur (72), sur la première face duquel est prévu un creux (84), qui est ajusté à la forme du segment de fixation (24b) sur l'arbre d'entraînement (16b), afin de former ainsi un assemblage par conjugaison de forme, et sur la deuxième face duquel est prévu un segment de fixation (86) en relief, lequel permet un assemblage par conjugaison de forme avec l'outil, et présente une pluralité de pointes arrondies orientées vers l'extérieur, les pointes arrondies adjacentes étant reliées entre elles par des tronçons courbes en amont par rapport à l'axe médian (18) pour former une courbe fermée en continu, dont la forme correspond à la forme de l'ouverture de fixation, les pointes arrondies (28) se situant sur un premier cercle avec un premier diamètre (d), les pointes arrondies (28), dans leur zone extérieure, étant courbées en forme d'arc de cercle avec un rayon (r₂), et le rapport entre le premier diamètre (d) et le rayon (r₂) étant égal à 30 à 46 environ, de préférence à 34 à 42 environ, en particulier à 37 environ.

15. Adaptateur selon la revendication 14, **caractérisé en ce que** le disque d'adaptateur (72) comporte un orifice central (88) pour le passage d'une vis de fixation (36b) apte à être vissée dans l'arbre d'entraînement (16b).

16. Adaptateur selon la revendication 14, **caractérisé par** une vis de fixation (36d), qui est destinée à être vissée dans un trou borgne fileté (104) de l'arbre d'entraînement (16) et qui comporte une tête (38d) qui est dimensionnée pour venir en appui sur l'outil (50c).
